# EUROPEAN PATENT SPECIFICATION

(11) **EP 4 236 293 B1**
(45) Date of publication and mention of the grant of the patent: **28.01.2026**
(21) Application number: 21901030.3
(22) Date of filing: 02.12.2021
(51) Int. Cl.: H04N 23/55, H04N 23/54, H04N 23/58, G03B 17/17, H04M 1/02, H04N 23/57, H04N 23/67, H04N 23/68, H04N 23/51

(54) **CAMERA MODULE AND ELECTRONIC DEVICE COMPRISING SAME**
KAMERAMODUL UND ELEKTRONISCHE VORRICHTUNG DAMIT
MODULE DE CAMÉRA ET DISPOSITIF ÉLECTRONIQUE LE COMPRENANT

(30) Priority: 04.12.2020 KR 20200168722
(43) Date of publication of application: 30.08.2023
(73) Proprietor: Samsung Electronics Co., Ltd., Suwon-si, Gyeonggi-do 16677 (KR)
(72) Inventor: LEE, Kyeongeun, Suwon-si, Gyeonggi-do 16677 (KR); KIM, Manho, Suwon-si, Gyeonggi-do 16677 (KR); LEE, Kihuk, Suwon-si, Gyeonggi-do 16677 (KR); LEE, Jeongyeol, Suwon-si, Gyeonggi-do 16677 (KR); JUNG, Hwajoong, Suwon-si, Gyeonggi-do 16677 (KR)
(74) Representative: HGF
(86) International application number: PCT/KR2021/018092
(87) International publication number: WO 2022/119342

(56) References cited:
- WO-A1-2020/224371
- CN-A- 111 474 680
- CN-A- 111 474 680
- JP-A- 2006 171 449
- JP-A- 2006 171 449
- KR-A- 20150 000 180
- KR-A- 20190 071 569
- KR-A- 20200 127 756
- US-A1- 2011 194 009
- US-B2- 8 248 710

## Description

### Technical Field

Various embodiments relate to a camera module and an electronic apparatus including the camera module.

### Background Art

Recently, as a camera module is mounted in an electronic apparatus to replace a digital camera, camera modules having various functions have been developed. However, there has been a problem in that the length of an optical axis should be long to ensure continuous optical zoom performance at high magnification. Due to an increase in the length of the optical axis, the thickness of an electronic apparatus may increase.

In order to solve the above problem, a folded camera has been used in an electronic apparatus in which a lens and an image sensor are not vertically stacked but vertically arranged. As a display included in an electronic apparatus is implemented in a flexible form, the shape and area in which the display is mounted have been changed. A space for mounting a camera module is modified in response to changes in the shape and area of the display being mounted. There is a demand to change the shape of the camera module to correspond to the modified mounting space.

JP 2006171449A discloses a prism having a reflection surface and a prism having reflection surfaces and bending the optical axis of imaging light by reflecting the imaging light are respectively disposed between an imaging lens taking in the imaging light, a zoom lens group comprising a plurality of lenses and adjusting a focal distance, and a focus lens group comprising one lens and adjusting a focus.

US 8248710B2 discloses a prism type of lens includes a first reflection lens, at least a first lens group, a second reflection prism, at least a second lens group, a third reflection prism, and at least a third lens group sequentially arranged from an object side to an image side.

CN 111474680A discloses an optical lens, a camera module and an electronic device.

### Summary

Embodiments of the invention are set out in the appended claims.

### Disclosure

### Technical Problem

In an electronic apparatus to which a flexible display is applied, a space in which a camera module is mounted changes according to changes in the shape and area of the display. Accordingly, when a lens portion and a sensor portion are arranged to extend in one direction, a space generated according to the changes in the shape and area of the display may not be efficiently used.

Various embodiments of the disclosure provide a camera module, in which a dead space that may be generated in an electronic apparatus to which a flexible display is applied may be minimized, and an electronic apparatus including the camera module.

### Advantageous Effects

Various embodiments of the disclosure provide a camera module in which, in an electronic apparatus to which a slidable display is applied, a lens module is arranged in a dead space that may be generated by arranging the slidable display, such that the mounting efficiency of the camera module may be optimized, and an electronic apparatus including the camera module.

Also, provided are a camera module, in which the shape of the camera module is adjusted in consideration of an arrangement relationship with other components of an electronic apparatus, such that the mounting efficiency of the camera module may be optimized, and an electronic apparatus including the camera module.

Moreover, provided are a camera module, in which an optical path extending from a light incident portion to a sensor portion is adjusted, such that a high-magnification continuous zoom telecamera module structure may be implemented, and an electronic apparatus including the camera module.

### Description of Drawings

FIG. 1 is a block diagram of an electronic apparatus in a network environment, according to various embodiments.
FIGS. 2A and 2B are perspective views of an electronic apparatus including a slidable display, according to various embodiments.
FIG. 3 is a rear view of an electronic apparatus including a slidable display, according to various embodiments.
FIG. 4 is an enlarged view of a region B shown in FIG. 3.
FIG. 5 is a partial cross-sectional view of the electronic apparatus, taken along a line A-A' shown in FIG. 3.
FIG. 6 is a perspective view of a camera module according to various embodiments.
FIG. 7 is a block diagram of a camera module according to various embodiments.
FIG. 8 is a projected perspective view of a camera module according to various embodiments.
FIG. 9 is a front view of an image sensor according to various embodiments.
FIG. 10A is a projected front view of a camera module according to various embodiments.
FIG. 10B is a projected side view of a camera module according to various embodiments.
FIG. 10C is a projected side view of a camera module according to various embodiments.
FIG. 11 is a perspective view of a camera module according to various embodiments.
FIG. 12 is a block diagram of a camera module according to various embodiments.
FIG. 13 is a projected perspective view of a camera module according to various embodiments.
FIG. 14 is a front view of an image sensor according to various embodiments.
FIG. 15A is a projected front view of a camera module according to various embodiments.
FIG. 15B is a projected side view of a camera module according to various embodiments.
FIG. 15C is a projected side view of a camera module according to various embodiments.

### Mode for Invention

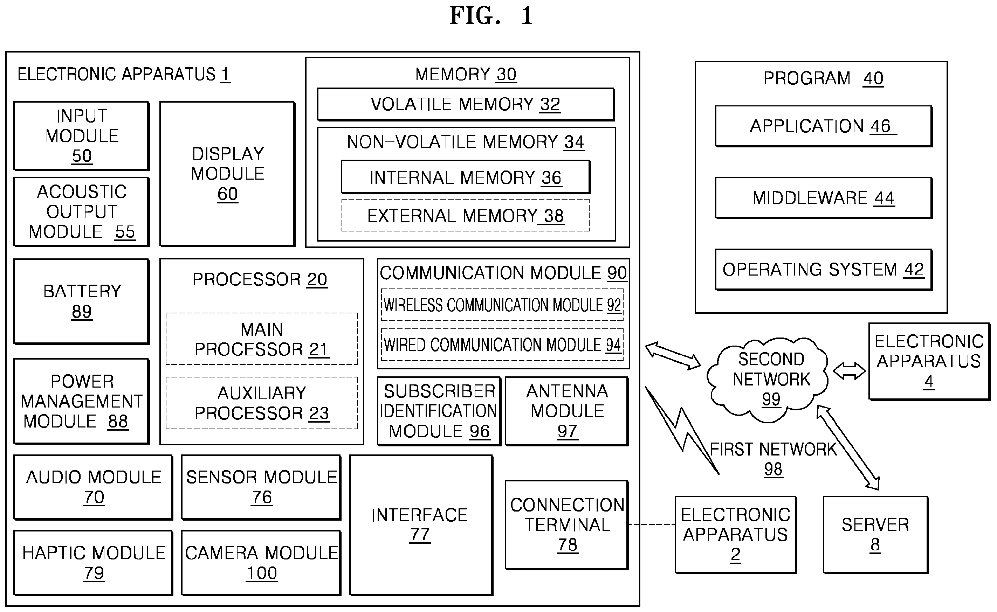

FIG. 1 is a block diagram of an electronic apparatus 1 in a network environment N, according to various embodiments. Referring to FIG. 1, the electronic apparatus 1 in the network environment N may communicate with an electronic apparatus 2 through a first network 98 (e.g., a short-range wireless communication network) or communicate with at least one of an electronic apparatus 4 or a server 8 through a second network 99 (e.g., a long-distance wireless communication network). According to an embodiment, the electronic apparatus 1 may communicate with the electronic apparatus 4 through the server 8. According to an embodiment, the electronic apparatus 1 may include a processor 20, a memory 30, an input module 50, an acoustic output module 55, a display module 60, an audio module 70, a sensor module 76, an interface 77, a connection terminal 78, a haptic module 79, a power management module 88, a battery 89, a communication module 90, a subscriber identification module 96, an antenna module 97, or a camera module 100. In some embodiments, in the electronic apparatus 1, at least one (e.g., the connection terminal 78) of the elements may be omitted, or one or more other elements may be added. In some embodiments, some (e.g., the sensor module 76, the camera module 100, or the antenna module 97) of the elements may be integrated into one element (e.g., the display module 60).

The processor 20 may execute, e.g., software (e.g., a program 40) to control at least one element (e.g., a hardware or software element) of the electronic apparatus 1 connected to the processor 20, and perform various data processes or calculations. According to an embodiment, as at least a part of data processes or calculations, the processor 20 may store, in a volatile memory 32, a command or data received from another element (e.g., the sensor module 76 or the communication module 90), process the command or data stored in the volatile memory 32, and store result data in a nonvolatile memory 34. According to an embodiment, the processor 20 may include a main processor 21 (e.g., a central processing unit or an application processor) or an auxiliary processor 23 (e.g., a graphics processing unit, a neural processing unit (NPU), an image signal processor, a sensor hub processor, or a communication processor) that may operate independently of or in conjunction with the main processor 21. For example, when the electronic apparatus 1 includes the main processor 21 and the auxiliary processor 23, the auxiliary processor 23 may be configured to use less power than the main processor 21 or to be specialized for a designated function. The auxiliary processor 23 may be implemented separately from or as a part of the main processor 21.

The auxiliary processor 23 may control at least some of functions or states related to at least one (e.g., the display module 60, the sensor module 76, or the communication module 90) of the elements of the electronic apparatus 1, e.g., instead of the main processor 21 while the main processor 21 is in an inactive (e.g., sleep) state, or in conjunction with the main processor 21 while the main processor 21 is in an active (e.g., application execution) state. According to an embodiment, the auxiliary processor 23 (e.g., an image signal processor or a communication processor) may be implemented as a part of another functionally related element (e.g., the camera module 100 or the communication module 90). According to an embodiment, the auxiliary processor 23 (e.g., the NPU) may include a hardware structure specialized for processing an artificial intelligence model. The artificial intelligence model may be generated through machine learning. Such the machine learning may be performed, e.g., by the electronic apparatus 1 itself where the artificial intelligence model is performed, or may be performed through a separate server (e.g., the server 8). A learning algorithm may include, e.g., supervised learning, unsupervised learning, semi-supervised learning, or reinforcement learning, but is not limited to the aforementioned example. The artificial intelligence model may include a plurality of artificial neural network layers. An artificial neural network may include one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of two or more of the above networks, but is not limited to the aforementioned example. The artificial intelligence model may include, additionally or alternatively, a software structure in addition to a hardware structure.

The memory 30 may store various pieces of data used by at least one element (e.g., the processor 20 or the sensor module 76) of the electronic apparatus 1. Data may include, e.g., input data or output data for software (e.g., the program 40) and a command related to the software. The memory 30 may include the volatile memory 32 or the nonvolatile memory 34.

The program 40 may be stored as software in the memory 30 and may include, e.g., an operating system 42, middleware 44, or an application 46.

The input module 50 may receive a command or data to be used for an element (e.g., the processor 20) of the electronic apparatus 1 from an external source (e.g., a user) of the electronic apparatus 1. The input module 50 may include, e.g., a microphone, a mouse, a keyboard, a key (e.g., a button), or a digital pen (e.g., a stylus pen).

The acoustic output module 55 may output an acoustic signal to the outside of the electronic apparatus 1. The acoustic output module 55 may include, e.g., a speaker or a receiver. The speaker may be used for general purposes, such as multimedia playback or recording playback. The receiver may be used to receive an incoming call. According to an embodiment, the receiver may be implemented separately from or as a part of the speaker.

The display module 60 may visually provide information to the external source (e.g., the user) of the electronic apparatus 1. The display module 60 may include, e.g., a display, a hologram apparatus, or a projector, and a control circuit for controlling a corresponding apparatus. According to an embodiment, the display module 60 may include a touch sensor configured to detect a touch or a pressure sensor configured to measure the magnitude of a force generated by the touch.

The audio module 70 may convert a sound into an electrical signal or conversely convert an electrical signal into a sound. According to an embodiment, the audio module 70 may obtain a sound through the input module 50, or output a sound through the acoustic output module 55 or an external electronic apparatus (e.g., the electronic apparatus 2) (e.g., a speaker or a headphone) directly or wirelessly connected to the electronic apparatus 1.

The sensor module 76 may detect an operating state (e.g., power or temperature) of the electronic apparatus 1 or an external environmental state (e.g., a user state), and generate an electrical signal or a data value corresponding to a detected state. According to an embodiment, the sensor module 76 may include, e.g., a gesture sensor, a gyro sensor, a barometric pressure sensor, a magnetic sensor, an acceleration sensor, a grip sensor, a proximity sensor, a color sensor, an infrared (IR) sensor, a biosensor, a temperature sensor, a humidity sensor, or an illuminance sensor.

The interface 77 may support one or more specified protocols that may be used for the electronic apparatus 1 to be directly or wirelessly connected to an external electronic apparatus (e.g., the electronic apparatus 2). According to an embodiment, the interface 77 may include, e.g., a high-definition multimedia interface (HDMI), a universal serial bus (USB) interface, a secure digital (SD) card interface, or an audio interface.

The connection terminal 78 may include a connector through which the electronic apparatus 1 may be physically connected to an external electronic apparatus (e.g., the electronic apparatus 2). According to an embodiment, the connection terminal 78 may include, e.g., an HDMI connector, a USB connector, an SD card connector, or an audio connector (e.g., a headphone connector).

The haptic module 79 may convert an electrical signal into a mechanical stimulus (e.g., a vibration or a motion) or an electrical stimulus that a user may perceive through a tactile or kinesthetic sense. According to an embodiment, the haptic module 79 may include, e.g., a motor, a piezoelectric element, or an electrical stimulation apparatus.

The power management module 88 may manage power supplied to the electronic apparatus 1. According to an embodiment, the power management module 88 may be implemented as, e.g., at least a part of a power management integrated circuit (PMIC).

The battery 89 may supply power to at least one element of the electronic apparatus 1. According to an embodiment, the battery 89 may include, e.g., a non-rechargeable primary cell, a rechargeable secondary cell, or a fuel cell.

The communication module 90 may establish a direct (e.g., wired) communication channel or a wireless communication channel between the electronic apparatus 1 and an external electronic apparatus (e.g., the electronic apparatus 2, the electronic apparatus 4, or the server 8), and may support communication through the established communication channel. The communication module 90 may include one or more communication processors that operate independently of the processor 20 (e.g., an application processor) and support direct (e.g., wired) communication or wireless communication. According to an embodiment, the communication module 90 may include a wireless communication module 92 (e.g., a cellular communication module, a short-range wireless communication module, or a global navigation satellite system (GNSS) communication module) or a wired communication module 94 (e.g., a local area network (LAN) communication module or a power line communication module). Among the communication modules, a corresponding communication module may communicate with an external electronic apparatus, e.g., the electronic apparatus 4 through the first network 98 (e.g., a short-range communication network such as Bluetooth, wireless fidelity (WiFi) direct, or infrared data association (IrDA)) or the second network 99 (e.g., a long-distance communication network such as a legacy cellular network, a 5th generation (5G) network, a next-generation communication network, Internet, or a computer network (e.g., a LAN or a wide area network (WAN)). These various types of communication modules may be integrated into one element (e.g., a single chip) or implemented as a plurality of separate elements (e.g., a plurality of chips). The wireless communication module 92 may identify or authenticate the electronic apparatus 1 within a communication network, such as the first network 98 or the second network 99, by using subscriber information (e.g., an international mobile subscriber identity (IMSI)) stored in the subscriber identification module 96.

The wireless communication module 92 may support a 5G network after a 4th generation (4G) network, and a next-generation communication technology, e.g., a new radio (NR) access technology. The NR access technology may support high-speed transmission of high-capacity data (enhanced mobile broadband (eMBB)), terminal power minimization and multiple terminal connections (massive machine type communications (mMTC)), or high reliability and low latency (ultra-reliable and low-latency communications (URLLC)). To achieve a high data rate, the wireless communication module 92 may support, e.g., a high-frequency band (e.g., a millimeter-wave (mmWave) band). The wireless communication module 92 may support various technologies for ensuring performance in the high-frequency band, such as beamforming, massive multiple-input and multiple-output (MIMO), full dimensional MIMO (FD-MIMO), array antenna, analog beamforming, or large scale antenna technologies. The wireless communication module 92 may support various requirements defined in the electronic apparatus 1, an external electronic apparatus (e.g., the electronic apparatus 4), or a network system (e.g., the second network 99). According to an embodiment, the wireless communication module 92 may support a peak data rate (e.g., 20 Gbps or more) for realizing eMBB, a loss coverage (e.g., 164 dB or less) for realizing mMTC, or U-plane latency (e.g., 0.5 ms or less in each of downlink (DL) and uplink (UL), or 1 ms or less for a round trip) for realizing URLLC.

The antenna module 97 may transmit or receive a signal or power to or from an external source (e.g., an external electronic apparatus). According to an embodiment, the antenna module 97 may include an antenna including a radiator having a conductive pattern or a conductor formed over a substrate (e.g., a printed circuit board (PCB)). According to an embodiment, the antenna module 97 may include a plurality of antennas (e.g., an array antenna). In this case, at least one antenna suitable for a communication method used in a communication network, such as the first network 98 or the second network 99, may be selected from among the plurality of antennas by, e.g., the communication module 90. The signal or power may be transmitted or received between the communication module 90 and an external electronic apparatus through the at least one selected antenna. According to some embodiments, in addition to the radiator, another component (e.g., a radio frequency integrated circuit (RFIC)) may be additionally formed as a part of the antenna module 97.

According to various embodiments, the antenna module 97 may form a mmWave antenna module. According to an embodiment, the mmWave antenna module may include a PCB, an RFIC arranged on or adjacent to a first surface (e.g., a bottom surface) of the PCB and capable of supporting a specified high-frequency band (e.g., a mmWave band), and a plurality of antennas (e.g., an array antenna) arranged on or adjacent to a second surface (e.g., a top surface or a side surface) of the PCB and capable of transmitting or receiving a signal in the specified high-frequency band.

At least some of the above elements may be connected to each other and exchange a signal (e.g., a command or data) with each other through a communication method (e.g., a bus, a general purpose input and output (GPIO), a serial peripheral interface (SPI), or a mobile industry processor interface (MIPI) between peripheral devices.

According to an embodiment, the command or data may be transmitted or received between the electronic apparatus 1 and an external electronic apparatus, e.g., the electronic apparatus 4 through the server 8 connected to the second network 99. Each external electronic apparatus, e.g., the electronic apparatus 2 or 4 may be the same type as or a different type from the electronic apparatus 1. According to an embodiment, all or some of operations executed in the electronic apparatus 1 may be executed in one or more external electronic apparatuses among external electronic apparatuses, e.g., the electronic apparatuses 2 and 4, and the server 8. For example, when the electronic apparatus 1 is to perform a certain function or service automatically or in response to a request from a user or another apparatus, the electronic apparatus 1 may request one or more external electronic apparatuses to perform at least a part of the function or service instead of or in addition to executing the function or service by itself. The one or more external electronic apparatuses having received the request may execute at least a part of the requested function or service or an additional function or service related to the request, and transmit a result of the execution to the electronic apparatus 1. The electronic apparatus 1 may process the result as it is or additionally and provide the result as at least a part of a response to the request. For this, for example, cloud computing, distributed computing, mobile edge computing (MEC), or client-server computing technology may be used. The electronic apparatus 1 may provide an ultra-low latency service using, e.g., distributed computing or MEC. In another embodiment, an external electronic apparatus, e.g., the electronic apparatus 4 may include an Internet-of-things (IoT) device. The server 8 may be an intelligent server using machine learning and/or a neural network. According to an embodiment, an external electronic apparatus, e.g., the electronic apparatus 4 or the server 8 may be included in the second network 99. The electronic apparatus 1 may be applied to intelligent services (e.g., smart homes, smart cities, smart cars, or health care) based on 5G communication technology or loT-related technology.

The camera module 100 may capture still images and videos. According to an embodiment, the camera module 100 may include one or more lenses, image sensors, image signal processors, or flashes. According to an embodiment, the electronic apparatus 1 may include a plurality of camera modules 100 having different attributes or functions. In this case, for example, at least one of the plurality of camera modules 100 may be a wide-angle camera, and at least another one may be a telephoto camera. Similarly, at least one of the plurality of camera modules 100 may be a front camera, and at least another one may be a rear camera.

Recently, as flexible displays are applied in electronic apparatuses, an area where a display is arranged and a shape of a display may change. By adjusting a shape of the camera module 100 as the shape and arrangement area of the display change, mounting efficiency of the camera module 100 may be optimized. Hereinafter, the camera module 100 capable of optimizing the mounting efficiency in the electronic apparatus 1 to which a slidable display with a variable area is applied is described.

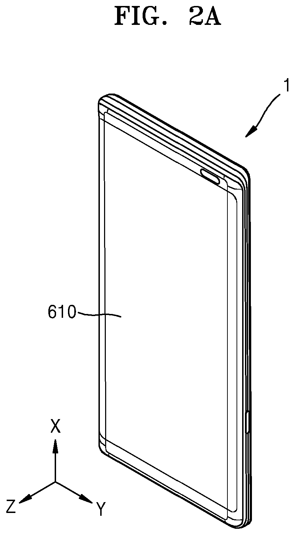

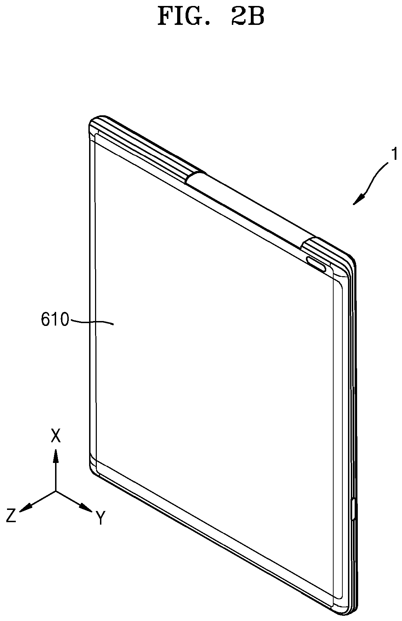

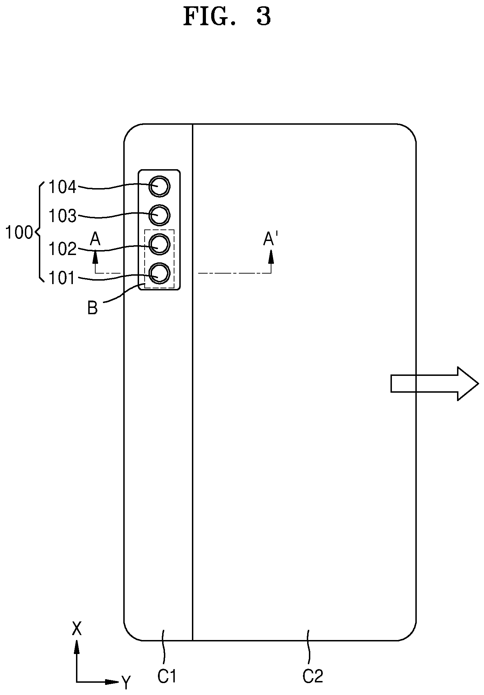

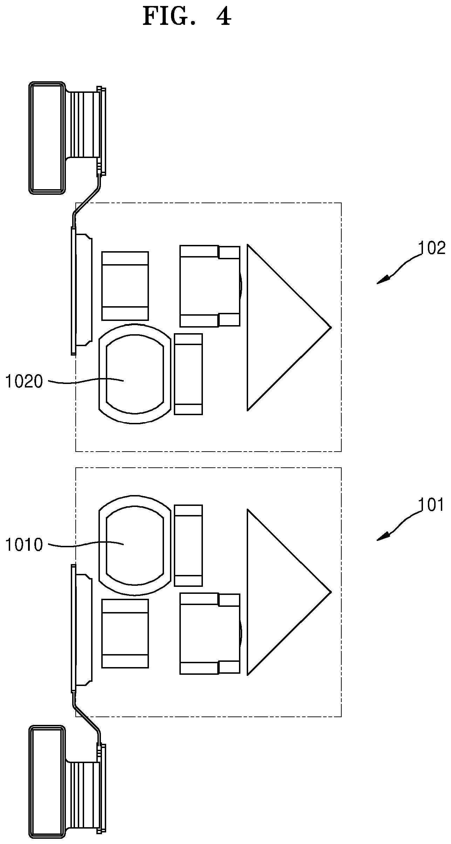

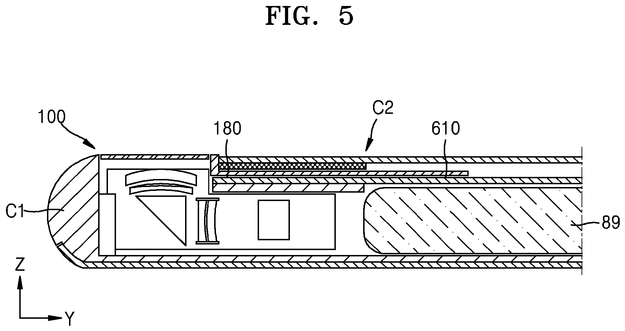

FIGS. 2A and 2B are perspective views of an electronic apparatus including a slidable display, according to various embodiments. FIG. 3 is a rear view of the electronic apparatus including the slidable display, according to various embodiments. FIG. 4 is an enlarged view of a region B shown in FIG. 3, and FIG. 5 is a partial cross-sectional view of the electronic apparatus, taken along a line A-A' shown in FIG. 3.

Referring to FIGS. 2A, 2B, and 3, the electronic apparatus 1 may include a first housing C1, a second housing C2, the camera module 100, and a display 610. The display 610 may be, e.g., a flexible display that is bendable. For example, the flexible display may include a liquid crystal display (LCD), a light-emitting diode (LED) display, an organic light-emitting diode (OLED) display, a microelectromechanical system (MEMS) display, or an electronic paper display. In addition, the display 610 may display various pieces of content (e.g., text, images, videos, icons, or symbols) to a user. The display 610 may include a touch screen and may receive a touch, a gesture, proximity, or a hovering input using an electronic pen or a part of the user's body.

The first housing C1 and the second housing C2 form an external appearance of the electronic apparatus 1 and may include a metal material or a plastic material. The first housing C1 and the second housing C2 include the camera module 100 and the display 610 therein. As shown in FIG. 3, the second housing C2 may be slid in one direction (Y-direction) with respect to the first housing C1. In this case, the display 610 may also be slid and unfolded in one direction (Y-direction) with respect to the first housing C1.

As an example, as shown in FIGS. 2A and 3, convenience of use may be improved by rolling a part of the display 610 and storing the same between the first housing C1 and the second housing C2, which are arranged on the rear side of the display 610. Also, as shown in FIG. 2B, the electronic apparatus 1 may unfold the display 610 and provide information to a user. In this case, the second housing C2 may be slid in one direction (Y-direction) with respect to the first housing C1. The display 610 fixed to the second housing C2 may also be slid in one direction (Y-direction) with respect to the first housing C1 and unfolded on the front surface of the electronic apparatus 1.

Referring to FIGS. 3 and 4, a plurality of camera modules 101-104 may be accommodated in one side portion of the first housing C1. In this case, an optical system and an image sensor may be arranged, such that a first incident portion 1010 and a second incident portion 1020 of the plurality of camera modules 101-104 adjacent to each other, e.g., a first camera module 101 and a second camera module 102, are adjacent to each other. Accordingly, when the first camera module 101 and the second camera module 102 are used to capture an image, problems caused by parallax generated from a difference in distance between the first incident portion 1010 and the second incident portion 1020 may be minimized.

Also, referring to FIGS. 3 and 5, the camera module 100 may be accommodated in one side portion of the first housing C1. According to an example, when a part of the display 610 is accommodated in a rear portion of the electronic apparatus 1, the camera module 100 may include a certain stepped portion 180 for accommodating the display 610. By accommodating a certain component of the camera module 100 in the stepped portion 180 described above, the mounting efficiency of the camera module 100 may be improved.

Also, a sufficient overall length distance needs to be secured in one direction (Y-direction), to perform high-magnification continuous zoom function of the camera module 100. However, a sufficient overall length distance may not be secured in one direction (Y-direction) due to an arrangement of another component, e.g., an arrangement of the battery 89. An optical system included in the camera module 100 needs to be designed to secure a sufficient optical axis distance in one direction (Y-direction).

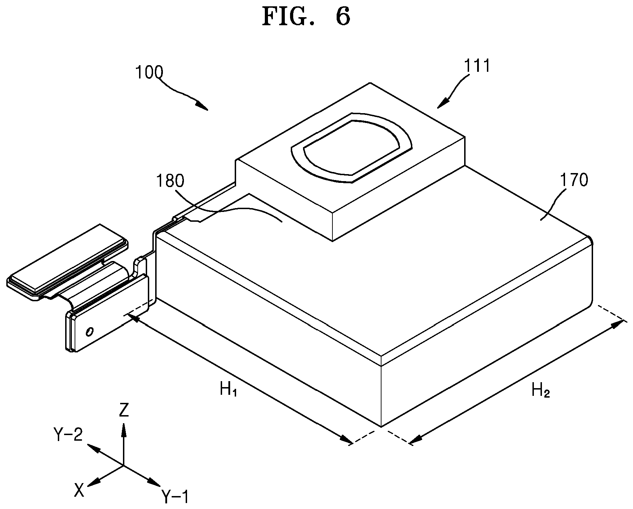

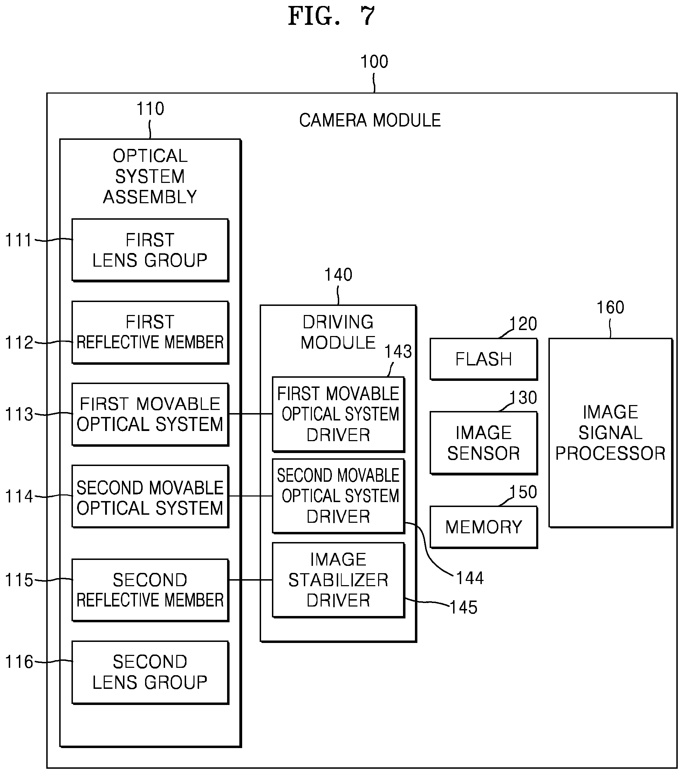

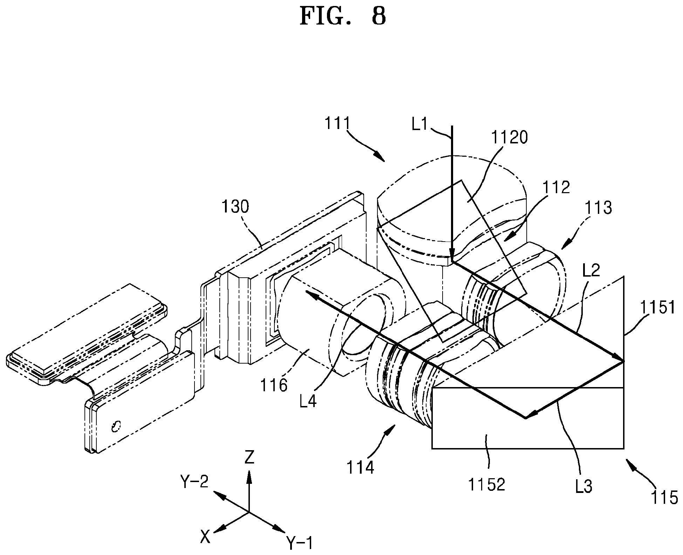

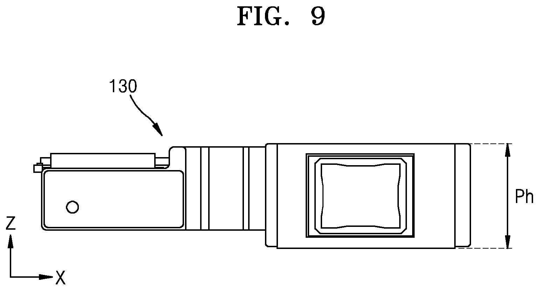

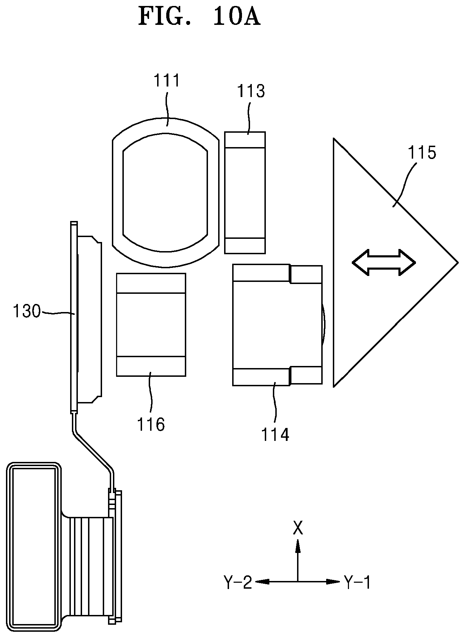

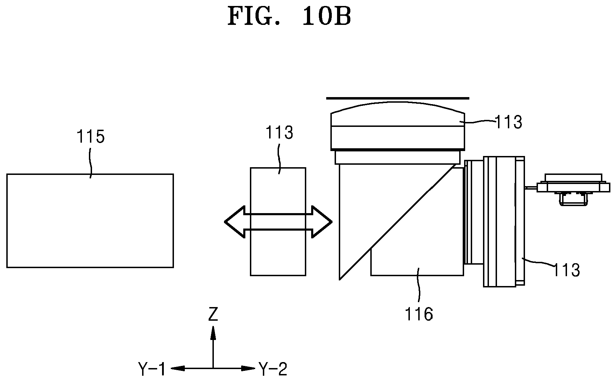

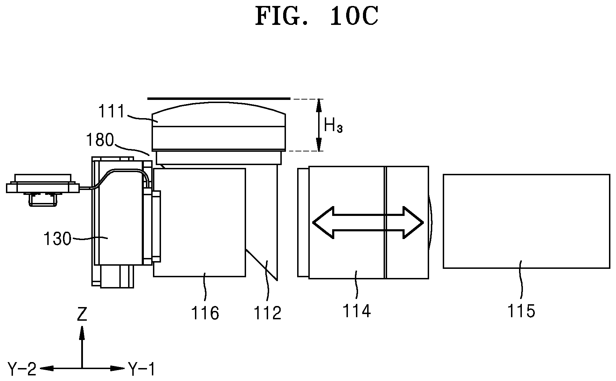

FIG. 6 is a perspective view of a camera module according to various embodiments. FIG. 7 is a block diagram of the camera module according to various embodiments. FIG. 8 is a projected perspective view of the camera module according to various embodiments. FIG. 9 is a front view of an image sensor according to various embodiments. FIG. 10A is a projected front view of the camera module according to various embodiments. FIG. 10B is a projected side view of the camera module according to various embodiments. FIG. 10C is a projected side view of the camera module according to various embodiments.

Referring to FIGS. 6 to 8, the camera module 100 may include an optical system assembly 110, a flash 120, an image sensor 130, a driving module 140, a memory 150 (e.g., a buffer memory), an image signal processor 160, and a case 170. The optical system assembly 110 may collect or reflect light emitted from a subject that is an object of which an image is to be captured. The optical system assembly 110 may include one or more lenses and a reflective member. According to an embodiment, the optical system assembly 110 may include a first lens group 111, a first reflective member 112, a first movable optical system 113, a second movable optical system 114, a second reflective member 115, and a second lens group 116.

The first lens group 111 may include one or more lenses. According to an example, the one or more lenses included in the first lens group 111 may be arranged to be stacked in a first direction (Z-direction). As an example, the first lens group 111 may be arranged in the stepped portion 180 extending in the first direction (Z-direction) from an upper end of the image sensor 130, as shown in FIGS. 6 and 10C. For example, the stepped portion 180 may have a third length H₃ in the first direction (Z-direction), and the third length H₃ may be 2.75 or less. As the first lens group 111 is arranged to be fixed to the stepped portion 180 that protrudes, another component, e.g., the display 610, of the electronic apparatus 1 may be arranged on a side of the stepped portion 180, as shown in FIG. 5.

The first reflective member 112 is an optical system that is arranged under the first lens group 111 in the first direction (Z-direction) and may change an optical path of first incident light L1 passing through the first lens group 111. As an example, when the first reflective member 112 is a reflective optical system, a folded optics structure in which a traveling path of the first incident light L1 that is incident is changeable to second incident light L2 may be implemented. According to the folded optics structure described above, by elongating the optical path using one or more reflective surfaces 1120, a height (length in the first direction (Z-direction) of the camera module 100 may be greatly reduced regardless of a focal length of the camera module 100.

The first movable optical system 113 may include one or more lens portions. Also, the first movable optical system 113 is between the first reflective member 112 and the second reflective member 115 to be described below, as shown in FIG. 10B, such that the first movable optical system 113 may be moved in a (2-1)th direction (Y-1 direction) or a (2-2)th direction (Y-2 direction). As an example, the first movable optical system 113 is moved in the (2-1)th direction (Y-1 direction) or the (2-2)th direction (Y-2 direction) by a first movable optical system driver 143 included in the driving module 140, and thus, a relative position of the first movable optical system 113 with respect to another optical system may be changed. Accordingly, the first movable optical system driver 143 may include one or more of a zoom module that performs a zooming or telephoto function or an auto focusing (AF) module that performs a focusing function on a subject.

The second movable optical system 114 includes one or more lens portions. Also, the second movable optical system 114 is between the second reflective member 115 and the image sensor 130 to be described below, as shown in FIG. 10C, such that the second movable optical system 114 may be moved in the (2-1)th direction (Y-1 direction) or the (2-2)th direction (Y-2 direction). As an example, the second movable optical system 114 is moved in the (2-1)th direction (Y-1 direction) or the (2-2)th direction (Y-2 direction) by a second movable optical system driver 144 included in the driving module 140, and thus, a relative position of the second movable optical system 114 with respect to another optical system may be changed. Accordingly, the second movable optical system driver 144 may include one or more of a zoom module that performs a zooming or telephoto function or an AF module that performs a focusing function on a subject.

As described above, the first movable optical system 113 and the second movable optical system 114 are arranged symmetrically with respect to the second reflective member 115 and moved in the (2-1)th direction (Y-1 direction) or the (2-2)th direction (Y-2 direction), and accordingly, each of the first movable optical system 113 and the second movable optical system 114 may obtain an individual optical path. Accordingly, a sufficient overall length for a high-magnification continuous zoom function may be secured without extending an overall length of the camera module 100 in the (2-1)th direction (Y-1 direction) or the (2-2)th direction (Y-2 direction).

In the aforementioned embodiments, it has been described that both the first movable optical system 113 and the second movable optical system 114 are arranged, such that the camera module 100 may secure a sufficient overall length in consideration of the high-magnification continuous zoom function. However, the disclosure is not limited thereto, and only one of the first movable optical system 113 and the second movable optical system 114 may be arranged. Also, each of the first movable optical system 113 and the second movable optical system 114 may include a zoom module and an AF module, or one of the first movable optical system 113 and the second movable optical system 114 may include both a zoom module and an AF module.

The second reflective member 115 may be an optical system capable of changing an optical path of the second incident light L2 reflected by the first reflective member 112. As an example, the second reflective member 115 may be spaced apart from the first reflective member 112 in the (2-1)th direction (Y-1 direction) perpendicular to the first direction (Z-direction). When the second reflective member 115 is a reflective optical system, the second incident light L2 incident in the (2-1)th direction (Y-1 direction) may be reflected twice. As an example, in this case, the second reflective member 115 may include a first reflective surface 1151 and a second reflective surface 1152. A traveling path of the second incident light L2 is reflected once and becomes third incident light L3 along a third direction (X-direction). A traveling path of the third incident light L3 may be reflected twice and changed to fourth incident light L4 along the (2-2)th direction (Y-2 direction).

As described above, the traveling path of the second incident light L2 in the (2-1)th direction (Y-1 direction) is reversed to the fourth incident light L4 along the (2-2)th direction (Y-2 direction), a sufficient optical path of incident light may be secured, but the overall length of the camera module 100 extending in the (2-1)th direction (Y-1 direction) or the (2-2)th direction (Y-2 direction) may be reduced. Accordingly, an overall length for obtaining a high-magnification continuous zoom function may be secured, and the mounting efficiency of the camera module 100 may also be improved.

Also, as shown in FIG. 10A, the second reflective member 115 may be an image stabilizer moving in the (2-1)th direction (Y-1 direction) or the (2-2)th direction (Y-2 direction). As an example, the second reflective member 115 may be moved in the (2-1)th direction (Y-1 direction) or the (2-2)th direction (Y-2 direction) by an image stabilizer driver 145 included in the driving module 140, in response to a movement of the camera module 100 or the electronic apparatus 1 including the camera module 100. This compensates for at least a part of negative effects of the movement on an image being captured. According to an embodiment, the camera module 100 may include a gyro sensor (not shown) or an acceleration sensor (not shown) capable of detecting the movement of the camera module 100 or the electronic apparatus 1.

The second lens group 116 may be a fixed lens between the second movable optical system 114 and the image sensor 130. As an example, the second lens group 116 may include one or more lenses. According to an example, the one or more lenses included in the second lens group 116 may be arranged in the (2-1)th direction (Y-1 direction).

The flash 120 may emit light used to enhance light emitted or reflected from a subject. According to an embodiment, the flash 120 may include at least one LED (e.g., a red-green-blue (RGB) LED, a white LED, an infrared LED, or an ultraviolet LED) or a xenon lamp.

The image sensor 130 may convert, into an electrical signal, light emitted or reflected from a subject and transmitted through the optical system assembly 110, and obtain an image corresponding to the subject. According to an example, the image sensor 130 may be spaced apart from the second reflective member 115 in the (2-2)th direction (Y-2 direction). Accordingly, the fourth incident light L4 reflected from the second reflective member 115 may be incident on the image sensor 130 in the (2-2)th direction (Y-2 direction). Also, the image sensor 130 may be spaced apart from the first reflective member 112 in the third direction (X-direction). In addition, the image sensor 130 may be arranged to be supported on a sidewall of the case 170. In this case, the image sensor 130 may have a height Ph that is substantially the same as a height of the case 170 as shown in FIG. 9, to secure a maximum light-receiving area.

According to an embodiment, the image sensor 130 may include, e.g., one image sensor selected from among image sensors having different attributes, such as an RGB sensor, a black-and-white (BW) sensor, an IR sensor, or a UV sensor, a plurality of image sensors having the same attribute, or a plurality of image sensors having different attributes. Each image sensor included in the image sensor 130 may be implemented using, e.g., a charged coupled device (CCD) sensor or a complementary metal oxide semiconductor (CMOS) sensor.

The memory 150 may at least temporarily store at least a part of an image obtained through the image sensor 130 for a next image processing operation. For example, when image obtainment using a shutter is delayed or a plurality of images are obtained at high speed, an obtained original image (e.g., a Bayer-patterned image or a high-resolution image) may be stored in the memory 150, and a corresponding copy image (e.g., a low-resolution image) may be previewed through the display module 60. Thereafter, when a specified condition (e.g., a user input or a system command) is satisfied, at least a part of the original image stored in the memory 150 may be obtained and processed by, e.g., the image signal processor 160.

The image signal processor 160 may perform one or more image processings on an image obtained through the image sensor 130 or an image stored in the memory 150. The one or more image processings may include, e.g., depth map generation, three-dimensional modeling, panorama generation, feature point extraction, image synthesis, or image compensation (e.g., noise reduction, resolution adjustment, brightness adjustment, blurring, sharpening, or softening). Additionally or alternatively, the image signal processor 160 may perform control (e.g., exposure time control or read-out timing control) for at least one (e.g., the image sensor 130) of the elements included in the camera module 100. An image processed by the image signal processor 160 may be stored again in the memory 150 for further processing or provided to an external element (e.g., the memory 30, the display module 60, the electronic apparatus 2, the electronic apparatus 4, or the server 8) of the camera module 100. According to an embodiment, the image signal processor 160 may be configured as at least a part of the processor 20 or as a separate processor operating independently of the processor 20. When the image signal processor 160 is configured as a separate processor from the processor 20, at least one image processed by the image signal processor 160 may be displayed through the display module 60 as it is or after additional image processing is performed by the processor 20.

Referring back to FIGS. 6 and 8, according to an embodiment, the camera module 100 may reduce a height (length in the first direction (Z-direction) of the camera module 100 by arranging the first lens group 111 that changes the optical path of the first incident light L1. Also, in the camera module 100, the second reflective member 115 that changes the optical path of the second incident light L2 is arranged, such that the overall length of the camera module 100 extending in the (2-1)th direction (Y-1 direction) or the (2-2)th direction (Y-2 direction) may be reduced. As an example, the overall length (a first length H₁ extending in the (2-1)th direction (Y-1 direction) or the (2-2)th direction (Y-2 direction)) of the camera module 100 may be about 17.5 mm to about 37 mm. Also, a second length H₂ of the camera module 100 extending in the third direction (X-direction) may be about 17 mm to about 33 mm. For example, a ratio of the first length H₁ of the camera module 100 extending in the (2-1)th direction (Y-1 direction) or the (2-2)th direction (Y-2 direction) to the second length H₂ of the camera module 100 extending in the third direction (X-direction) may be about 1:0.7 to about 1:1.4. Accordingly, the shape of the camera module 100 may be converted into a square shape. Therefore, according to an embodiment, the camera module 100 may secure an overall length to obtain a high-magnification continuous zoom function, and the shape of the camera module 100 is converted into a square shape, such that the mounting efficiency of the camera module 100 may be improved.

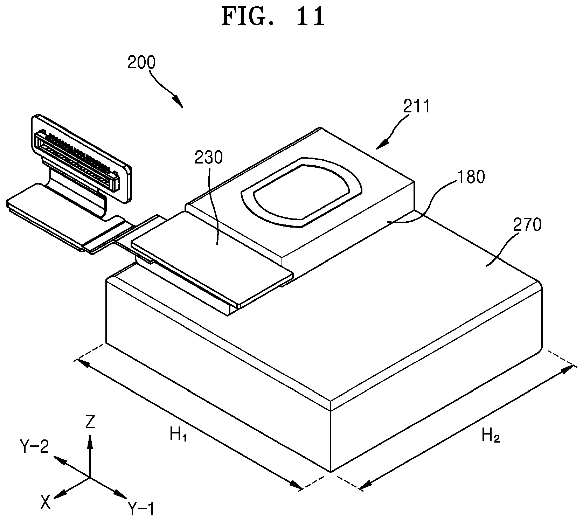

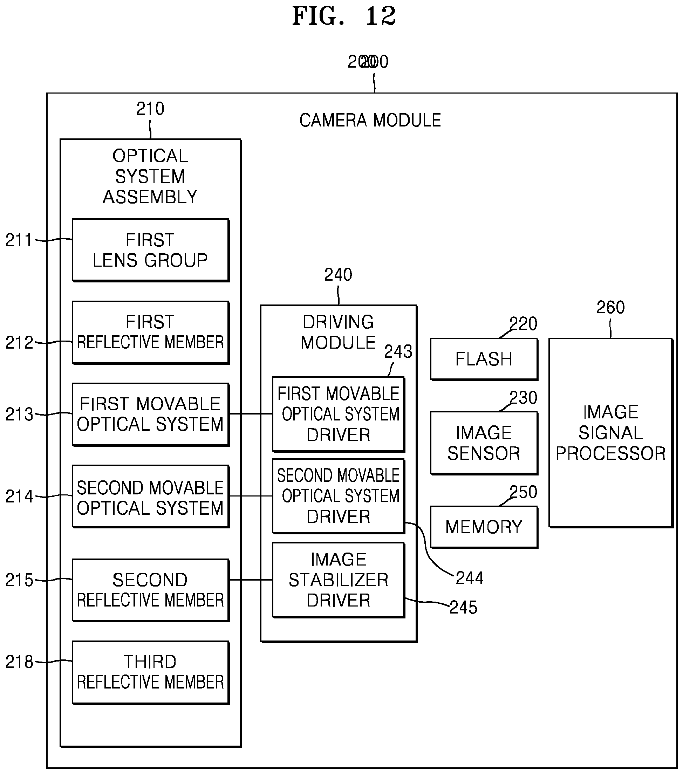

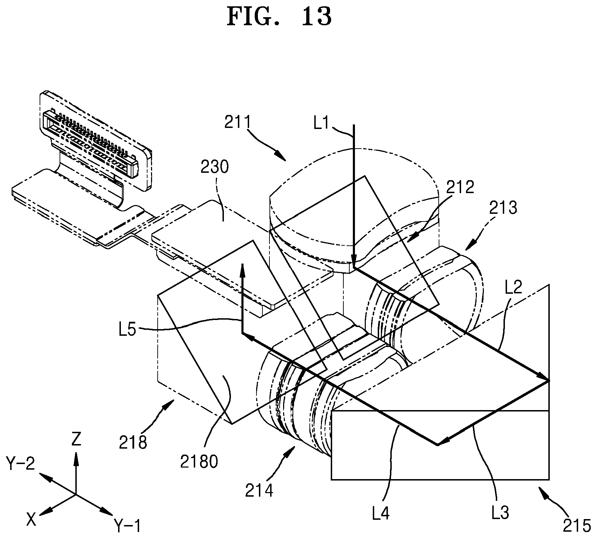

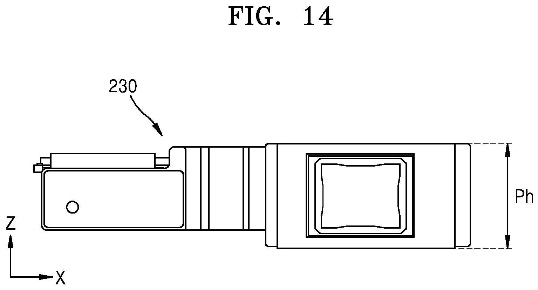

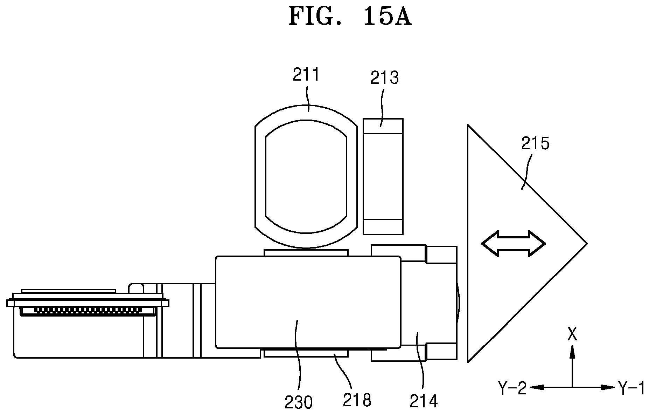

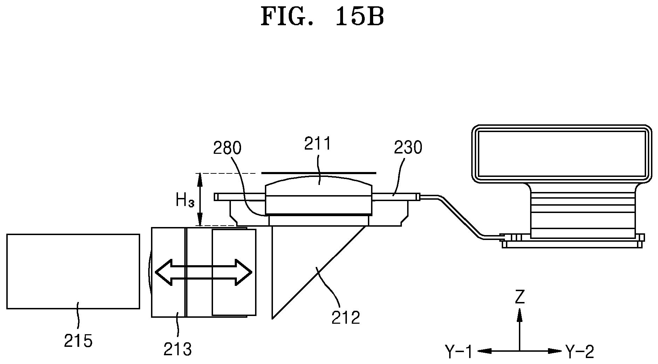

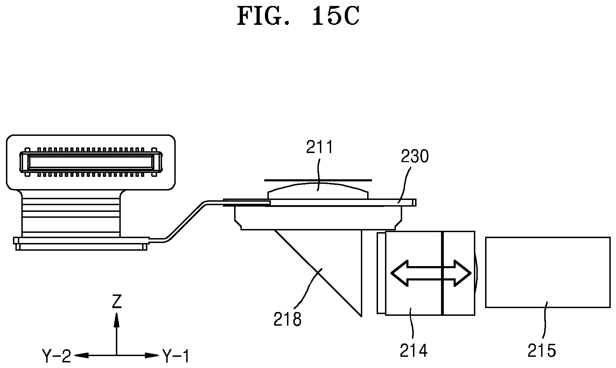

FIG. 11 is a perspective view of the camera module according to various embodiments. FIG. 12 is a block diagram of the camera module according to various embodiments. FIG. 13 is a projected perspective view of the camera module according to various embodiments. FIG. 14 is a front view of the image sensor according to various embodiments. FIG. 15A is a projected front view of the camera module according to various embodiments. FIG. 15B is a projected side view of the camera module according to various embodiments. FIG. 15C is a projected side view of the camera module according to various embodiments.

Referring to FIGS. 11 to 13, a camera module 200 may include an optical system assembly 210, a flash 220, an image sensor 230, a driving module 240, a memory 250 (e.g., a buffer memory), an image signal processor 260, and a case 270. Descriptions related to the flash 220, the driving module 240, the memory 250 (e.g., the buffer memory), the image signal processor 260, and the case 270 are substantially the same as those of the flash 120, the driving module 140, the memory 150 (e.g., the buffer memory), the image signal processor 160, and the case 170, which are shown in FIGS. 6 to 8, and thus, redundant descriptions are omitted herein.

The optical system assembly 210 may collect or reflect light emitted from a subject that is an object of which an image is to be captured. The optical system assembly 210 may include one or more lenses and a reflective member. According to an embodiment, the optical system assembly 210 may include a first lens group 211, a first reflective member 212, a first movable optical system 213, a second movable optical system 214, a second reflective member 215, and a third reflective member 218. Descriptions related to the first reflective member 212, the first movable optical system 213, the second movable optical system 214, and the second reflective member 215 are substantially the same as those of the first reflective member 112, the first movable optical system 113, the second movable optical system 114, and the second reflective member 115, which are shown in FIGS. 6 to 8, and thus, redundant descriptions are omitted herein.

The first lens group 211 may include one or more lenses. According to an example, the one or more lenses included in the first lens group 2111 may be arranged to be stacked in a first direction (Z-direction). As an example, the first lens group 211 may be arranged in a stepped portion 280 extending in the first direction (Z-direction) from an upper end of the first reflective member 212, as shown in FIGS. 11 and 15B. For example, the stepped portion 280 may extend by a third length H₃ in the first direction (Z-direction). In this case, the third length H₃ may be 2.75 mm or less. As described above, as the first lens group 211 is arranged to be fixed to the stepped portion 280, another component, e.g., the display 610, of the electronic apparatus 1 may be arranged on a side of the stepped portion 280, as shown in FIG. 11.

According to an embodiment, first incident light L1 passing through the first lens group 211 is reflected by the first reflective member 212 and becomes second incident light L2 along a (2-1)th direction (Y-1 direction). The second incident light L2 is reflected by the second reflective member 215 and becomes fourth incident light L4 along a (2-2)th direction (Y-2 direction). As an example, a traveling path of the second incident light L2 is reflected once and becomes third incident light L3 along a third direction (X-direction). A traveling path of the third incident light L3 may be reflected twice and changed to fourth incident light L4 along the (2-2)th direction (Y-2 direction).

The third reflective member 218 may be an optical system capable of changing an optical path of the fourth incident light L4 reflected by the second reflective member 215. As an example, the third reflective member 218 may be spaced apart from the second reflective member 215 in the (2-2)th direction (Y-2 direction). Also, in this case, the third reflective member 218 may be spaced apart from the first reflective member 212 in the third direction (X-direction). When the third reflective member 218 is a reflective optical system, the fourth incident light L4 incident in the (2-2)th direction (Y-2 direction) is reflected once by a reflective surface 2180. In this, a traveling path of the fourth incident light L4 is reflected once and becomes fifth incident light L5 along the first direction (Z-direction). The fifth incident light L5 may be incident on the image sensor 230.

According to an embodiment, the image sensor 230 may be arranged over the third reflective member 218 in the first direction (Z-direction). Accordingly, as described above, the fifth incident light L5 may be incident on the image sensor 230 in the first direction (Z-direction). Also, the image sensor 230 may be spaced apart from the first lens group 211 in the third direction (X-direction) and supported on an upper surface of the case 170. As the image sensor 230 is arranged to be supported on the upper surface of the case 270, a degree of design freedom of the image sensor 230 may be improved.

As an example, the image sensor 130 shown in FIG. 9 has the height Ph that is substantially the same as the height of the case 170, whereas a height Ph of the image sensor 230 shown in FIG. 14 may be set regardless of the height Ph of the case 270. Also, as the image sensor 230 is arranged on the upper surface of the case 270, not on a side surface of the case 270, a length of the camera module 200 may be reduced.

In addition, referring to FIG. 11, according to an example, an overall length (a first length H₁ extending in the (2-1)th direction (Y-1 direction) or the (2-2)th direction (Y-2 direction)) of the camera module 200 may be about 17.5 mm to about 37 mm. Also, a second length H₂ of the camera module 200 extending in the third direction (X-direction) may be about 17 mm to about 33 mm. For example, a ratio of the first length H₁ of the camera module 200 extending in the (2-1)th direction (Y-1 direction) or the (2-2)th direction (Y-2 direction) to the second length H₂ of the camera module 200 extending in the third direction (X-direction) may be about 1:0.7 to about 1:1.4. Accordingly, a shape of the camera module 200 may be converted into a square shape. Therefore, according to an embodiment, the camera module 200 may secure an overall length to obtain a high-magnification continuous zoom function, and the shape of the camera module 200 is converted into a square shape, such that mounting efficiency of the camera module 200 may be improved.

As used in various embodiments of the present document, the term "module" may include a unit implemented in hardware, software, or firmware, and may interchangeably be used with other terms, such as "logic," "logic block," "component," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth in the present document may be implemented as software (e.g., the program 40) including one or more instructions that are stored in a storage medium (e.g., an internal memory 36 or an external memory 38) that is readable by a machine (e.g., the electronic apparatus 1). For example, a processor (e.g., the processor 20) of the machine (e.g., the electronic apparatus 1) may invoke at least one of the one or more instructions stored in the storage medium, and execute the same. This allows the machine to be operated to perform at least one function according to the at least one instruction invoked. The one or more instructions may include a code generated by a complier or a code executable by an interpreter. A machine-readable storage medium may be provided in a form of a non-transitory storage medium. In this case, the term "non-transitory" simply means that the storage medium is a tangible apparatus and does not include a signal (e.g., an electromagnetic wave), but this term does not distinguish between a case where data is semi-permanently stored in the storage medium and a case where data is temporarily stored in the storage medium.

According to an embodiment, a method according to various embodiments disclosed in the present document may be provided by being included in a computer program product. The computer program product may be traded as a product between a seller and a buyer. The computer program product may be distributed in a form of machine-readable storage medium (e.g., a compact disc read-only memory (CD-ROM)), or distributed (e.g., downloaded or uploaded) through an application store (e.g., Play Store^{™}) or directly or online between two user apparatuses (e.g., smart phones). When distributed online, at least a part of the computer program product may be temporarily generated or at least temporarily stored in the machine-readable storage medium, such as memory of a manufacturer's server, a server of an application store, or a relay server.

According to various embodiments, each one (e.g., a module or a program) of the elements described above may include a single entity or a plurality of entities, and some of the plurality of entities may be separated into another element. According to various embodiments, one or more of the aforementioned elements or operations may be omitted, or one or more other elements or operations may be added. Alternatively or additionally, a plurality of elements (e.g., modules or programs) may be integrated into a single element. In such a case, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A camera module (200) comprising:
a first lens group (211) stacked in a first direction (Z);
a first reflective member (212) arranged under the first lens group in the first direction (Z), arranged to reflect a travelling path of a first incident light (L1) passing through the first lens to a second incident light (L2);
a second reflective member (215) arranged to be spaced apart from the first reflective member in a 2-1th direction (Y-1) perpendicular to the first direction, arranged to further reverse a travelling path of the second incident light to a fourth incident light (L4), a travelling path of the fourth incident light (L4) being reversed relative to the travelling path of the second incident light (L2);
a third reflective member (218) arranged to be spaced apart from the second reflective member in a 2-2th direction (Y-2), arranged to reflect the travelling path of the fourth incident light to a fifth incident light (L5) along the first direction (Z); and
an image sensor (130) arranged over the third reflective member in the first direction (Z), the image sensor being arranged such that a travelling path of the fifth incident light (L5) is incident on the image sensor (130),
wherein the first reflective member and the image sensor are arranged to be spaced apart from each other in a third direction (X) perpendicular to the first direction (Z) and the 2-1th direction (Y-1).

2. The camera module of claim 1, wherein a ratio of a first length of the camera module extending in the 2-1th direction (Y-1) or the 2-2th direction (Y-2) to a second length of the camera module extending in the third direction is 1:0.7 to 1:1.4.

3. The camera module of claim 1, wherein a first length of the camera module extending in the 2-1th direction or the 2-2th direction is 17.5 mm to 37 mm, and a second length of the camera module extending in the third direction is 17 mm to 33 mm.

4. The camera module of claim 1, wherein the first lens group (111) is arranged in a stepped portion (180) of the camera module (100) extending to have a third length in the first direction (Z) from a proximate end of the image sensor (130), and
the third length is 2.75 mm or less.

5. The camera module of claim 1, wherein the second reflective member is a reflective optical system having at least two reflective surfaces (1151, 1152).

6. The camera module of claim 1, wherein the first reflective member is a reflective optical system having at least one reflective surface (1120).

7. The camera module of claim 1, further comprising a first movable optical system (113) between the first reflective member and the second reflective member, the first reflective member being moved in the 2-1th direction or the 2-2th direction.

8. The camera module of claim 7, wherein the first movable optical system comprises at least one of an auto focusing, AF, module or a zoom module.

9. The camera module of claim 1, further comprising a second movable optical system (114) between the second reflective member and the image sensor, the second movable optical system being moved in the 2-1th direction or the 2-2th direction.

10. The camera module of claim 9, wherein the second movable optical system comprises at least one of an AF module or a zoom module.

11. The camera module of claim 9, further comprising a second lens group (116) between the second movable optical system and the image sensor.

12. The camera module of claim 1, wherein the second reflective member is arranged to be moved in the 2-1th direction or the 2-2th direction by an image stabilizer driver (145).

13. An electronic apparatus comprising the camera module of claim 1 and a display, wherein the first lens group is arranged in a stepped portion (180) of the camera module (100) extending in the first direction (Z) from a proximate end of the image sensor (130), and
a part of the display is arranged on a side of the stepped portion.

14. The electronic apparatus of claim 13, wherein the display comprises a flexible display.

## Patentansprüche

1. Kameramodul (200), umfassend:
eine erste Linsengruppe (211), die in einer ersten Richtung (Z) gestapelt ist;
ein erstes reflektierendes Element (212), das unter der ersten Linsengruppe in der ersten Richtung (Z) angeordnet ist und das angeordnet ist, um einen Bewegungsweg eines ersten einfallenden Lichts (L1), das durch die erste Linse verläuft, zu einem zweiten einfallenden Licht (L2) zu reflektieren;
ein zweites reflektierendes Element (215), das so angeordnet ist, dass es von dem ersten reflektierenden Element in einer 2-1. Richtung (Y-1) senkrecht zu der ersten Richtung beabstandet ist, und das angeordnet ist, um einen Bewegungsweg des zweiten einfallenden Lichts zu einem vierten einfallenden Licht (L4) weiter umzukehren, wobei ein Bewegungsweg des vierten einfallenden Lichts (L4) relativ zu dem Bewegungsweg des zweiten einfallenden Lichts (L2) umgekehrt ist;
ein drittes reflektierendes Element (218), das so angeordnet ist, dass es von dem zweiten reflektierenden Element in einer 2-2. Richtung (Y-2) beabstandet ist, und das so angeordnet ist, dass es den Bewegungsweg des vierten einfallenden Lichts zu einem fünften einfallenden Licht (L5) entlang der ersten Richtung (Z) reflektiert; und
einen Bildsensor (130), der über dem dritten reflektierenden Element in der ersten Richtung (Z) angeordnet ist wobei der Bildsensor so angeordnet ist, dass ein Bewegungsweg des fünften einfallenden Lichts (L5) auf den Bildsensor (130) einfällt,
wobei das erste reflektierende Element und der Bildsensor so angeordnet sind, dass sie in einer dritten Richtung (X) senkrecht zu der ersten Richtung (Z) und der 2-1. Richtung (Y-1) voneinander beabstandet sind.

2. Kameramodul nach Anspruch 1, wobei ein Verhältnis einer ersten Länge des Kameramoduls, die sich in der 2-1. Richtung (Y-1) oder der 2-2. Richtung (Y-2) erstreckt, zu einer zweiten Länge des Kameramoduls, die sich in der dritten Richtung erstreckt, 1:0,7 bis 1:1,4 beträgt.

3. Kameramodul nach Anspruch 1, wobei eine erste Länge des Kameramoduls, die sich in der 2-1. Richtung oder der 2-2. Richtung erstreckt, 17,5 mm bis 37 mm beträgt und eine zweite Länge des Kameramoduls, die sich in der dritten Richtung erstreckt, 17 mm bis 33 mm beträgt.

4. Kameramodul nach Anspruch 1, wobei die erste Linsengruppe (111) in einem abgestuften Abschnitt (180) des Kameramoduls (100) angeordnet ist, der sich so erstreckt, dass er eine dritte Länge in der ersten Richtung (Z) von einem nahen Ende des Bildsensors (130) aufweist, und
die dritte Länge 2,75 mm oder weniger beträgt.

5. Kameramodul nach Anspruch 1, wobei das zweite reflektierende Element ein reflektierendes optisches System mit mindestens zwei reflektierenden Oberflächen (1151, 1152) ist.

6. Kameramodul nach Anspruch 1, wobei das erste reflektierende Element ein reflektierendes optisches System mit mindestens einer reflektierenden Oberfläche (1120) ist.

7. Kameramodul nach Anspruch 1, ferner umfassend ein erstes bewegliches optisches System (113) zwischen dem ersten reflektierenden Element und dem zweiten reflektierenden Element, wobei das erste reflektierende Element in der 2-1. Richtung oder der 2-2. Richtung bewegt wird.

8. Kameramodul nach Anspruch 7, wobei das erste bewegliche optische System mindestens eines von einem Autofokus-Modul, AF-Modul, oder einem Zoom-Modul umfasst.

9. Kameramodul nach Anspruch 1, ferner umfassend ein zweites bewegliches optisches System (114) zwischen dem zweiten reflektierenden Element und dem Bildsensor, wobei das zweite bewegliche optische System in der 2-1. Richtung oder der 2-2. Richtung bewegt wird.

10. Kameramodul nach Anspruch 9, wobei das zweite bewegliche optische System mindestens eines von einem AF-Modul oder einem Zoom-Modul umfasst.

11. Kameramodul nach Anspruch 9, ferner umfassend eine zweite Linsengruppe (116) zwischen dem zweiten beweglichen optischen System und dem Bildsensor.

12. Kameramodul nach Anspruch 1, wobei das zweite reflektierende Element so angeordnet ist, dass es durch einen Bildstabilisatortreiber (145) in der 2-1. Richtung oder der 2-2. Richtung bewegt wird.

13. Elektronische Einrichtung, umfassend das Kameramodul nach Anspruch 1 und eine Anzeige, wobei die erste Linsengruppe in einem abgestuften Abschnitt (180) des Kameramoduls (100) angeordnet ist, der sich in der ersten Richtung (Z) von einem nahen Ende des Bildsensors (130) erstreckt, und
ein Teil der Anzeige an einer Seite des gestuften Abschnitts angeordnet ist.

14. Elektronische Einrichtung nach Anspruch 13, wobei die Anzeige eine flexible Anzeige umfasst.

## Revendications

1. Module de caméra (200) comprenant :
un premier groupe de lentilles (211) empilé suivant une première direction (Z) ;
un premier élément réfléchissant (212) agencé sous le premier groupe de lentilles suivant la première direction (Z), agencé de manière à réfléchir un trajet de déplacement d'une première lumière incidente (L1) traversant la première lentille vers une deuxième lumière incidente (L2) ;
un deuxième élément réfléchissant (215) agencé de manière à être espacé du premier élément réfléchissant suivant une 2-1ième direction (Y-1) perpendiculaire à la première direction, agencé de manière à inverser en outre le trajet de déplacement de la deuxième lumière incidente en une quatrième lumière incidente (L4), le trajet de déplacement de la quatrième lumière incidente (L4) étant inversé par rapport au trajet de déplacement de la deuxième lumière incidente (L2) ;
un troisième élément réfléchissant (218) agencé de manière à être espacé du deuxième élément réfléchissant suivant une 2-2ième direction (Y-2), agencé de manière à réfléchir le trajet de déplacement de la quatrième lumière incidente vers une cinquième lumière incidente (L5) le long de la première direction (Z) ; et
un capteur d'image (130) agencé sur le troisième élément réfléchissant suivant la première direction (Z), le capteur d'image étant agencé de sorte que le trajet de déplacement de la cinquième lumière incidente (L5) soit incident sur le capteur d'image (130),
ledit premier élément réfléchissant et ledit capteur d'image étant agencés de manière à être espacés l'un de l'autre suivant une troisième direction (X) perpendiculaire à la première direction (Z) et à la 2-1ième direction (Y-1).

2. Module de caméra selon la revendication 1, le rapport de la première longueur du module de caméra s'étendant suivant la 2-1ième direction (Y-1) ou la 2-2ième direction (Y-2) sur la deuxième longueur du module de caméra s'étendant suivant la troisième direction étant de 1:0,7 à 1:1,4.

3. Module de caméra selon la revendication 1, la première longueur du module de caméra s'étendant suivant la 2-1ième direction ou la 2-2ième direction étant de 17,5 mm à 37 mm, et la deuxième longueur du module de caméra s'étendant suivant la troisième direction étant de 17 mm à 33 mm.

4. Module de caméra selon la revendication 1, ledit premier groupe de lentilles (111) étant agencé dans une partie étagée (180) du module de caméra (100) s'étendant de manière à comporter une troisième longueur suivant la première direction (Z) à partir d'une extrémité proximale du capteur d'image (130), et
ladite troisième longueur étant supérieure ou égale à 2,75 mm.

5. Module de caméra selon la revendication 1, ledit second élément réfléchissant étant un système optique réfléchissant comportant au moins deux surfaces réfléchissantes (1151, 1152).

6. Module de caméra selon la revendication 1, ledit premier élément réfléchissant étant un système optique réfléchissant comportant au moins une surface réfléchissante (1120).

7. Module de caméra selon la revendication 1, comprenant en outre un premier système optique mobile (113) entre le premier élément réfléchissant et le deuxième élément réfléchissant, le premier élément réfléchissant étant déplacé suivant la 2-1ième direction ou la 2-2ième direction.

8. Module de caméra selon la revendication 7, ledit premier système optique mobile comprenant au moins un module parmi un module de mise au point automatique, AF, ou un module de zoom.

9. Module de caméra selon la revendication 1, comprenant en outre un second système optique mobile (114) entre le deuxième élément réfléchissant et le capteur d'image, le second système optique mobile étant déplacé suivant la 2-1ième direction ou la 2-2ième direction.

10. Module de caméra selon la revendication 9, ledit second système optique mobile comprenant au moins un module parmi un module de AF ou un module de zoom.

11. Module de caméra selon la revendication 9, comprenant en outre un second groupe de lentilles (116) entre le second système optique mobile et le capteur d'image.

12. Module de caméra selon la revendication 1, ledit deuxième élément réfléchissant étant agencé de manière à être déplacé suivant la 2-1ième direction ou la 2-2ième direction par un dispositif de commande de stabilisateur d'image (145).

13. Appareil électronique comprenant le module de caméra selon la revendication 1 et un dispositif d'affichage, ledit premier groupe de lentilles étant agencé dans une partie étagée (180) du module de caméra (100) s'étendant suivant la première direction (Z) à partir d'une extrémité proximale du capteur d'image (130), et
une partie du dispositif d'affichage étant agencée sur un côté de la partie étagée.

14. Appareil électronique selon la revendication 13, ledit dispositif d'affichage comprenant un dispositif d'affichage souple.
